**Europäisches Patentamt**

**European Patent Office**

**Office européen des brevets**

(19)

(11) Veröffentlichungsnummer : **0 086 868 B2**

(12) **NEUE EUROPÄISCHE PATENTSCHRIFT**

(45) Veröffentlichungstag der neuen Patentschrift :
**10.06.92 Patentblatt 92/24**

(21) Anmeldenummer : **82106771.7**

(22) Anmeldetag : **27.07.82**

(51) Int. Cl.⁵ : **B22D 31/00**, B07B 1/28,
B65G 27/04, B65G 27/20,
B65G 27/32, B06B 1/16

(54) **Verfahren und Schwingförderrinne zur Behandlung eines Gutes.**

(30) Priorität : **24.02.82 DE 3206544**

(43) Veröffentlichungstag der Anmeldung :
**31.08.83 Patentblatt 83/35**

(45) Bekanntmachung des Hinweises auf die
Patenterteilung :
**12.02.86 Patentblatt 86/07**

(45) Bekanntmachung des Hinweises auf die
Entscheidung über den Einspruch :
**10.06.92 Patentblatt 92/24**

(84) Benannte Vertragsstaaten :
**AT CH DE FR GB IT LI NL**

(56) Entgegenhaltungen :
**DE-A- 2 431 509**
**DE-A- 2 551 396**
**DE-A- 2 853 344**
**DE-C- 1 926 291**
**FR-A- 1 274 182**
**US-A- 3 159 950**
**US-A- 3 793 780**

(56) Entgegenhaltungen :
**Sieben nach dem Mikrowurf-Prinzip, S.7059,
1976, Seite 4**
**Schwingroste zum Zerkleinern von gefrorenem Schüttgut, Aufbereitungstechnik 11/1968,
Seiten 589-591**
**Betrachtungen über den Einfluss der Schwingungsdaten auf den Siebvorgang, Aufbereitungstechnik 11/1963, Seite 466, Bild 7**

(73) Patentinhaber : **CARL SCHENCK AG**
**Landwehrstrasse 55 Postfach 40 18**
**W-6100 Darmstadt (DE)**

(72) Erfinder : **Scharmer, Wolfgang, Dipl.-Ing.**
**Albrechtstrasse 37**
**W-6100 Darmstadt-Arheilgen (DE)**
Erfinder : **Sättler, Heinz, Dipl.-Ing.**
**Kalmitstrasse 41**
**W-6711 Gerolsheim (DE)**
Erfinder : **Schlag, Eugen**
**Händelstrasse 63**
**W-6100 Darmstadt (DE)**

(74) Vertreter : **Brandt, Ernst-Ulrich**
**Fa. Carl Schenck AG Patentabteilung**
**Landwehrstrasse 55 Postfach 40 18**
**W-6100 Darmstadt 1 (DE)**

EP 0 086 868 B2

## Beschreibung

Die Erfindung betrifft ein Verfahren zur Behandlung eines Gutes in einer Schwingförderrinne, insbesondere zum Reinigen und Kühlen von mit Formsand behafteten Gußteilen, bei dem Schwingungs- bzw. Kraft-Komponenten im wesentlichen senkrecht und quer zur Hauptförderrichtung (Rinnenlängsrichtung) erzeugt werden Der Oberbegriff von Anspruch 1 ist jeweils bekannt aus der DE-A-2 853 344. Zum Stand der Technik ist auch noch auf die US-A-3 793 780 zu verweisen, die einen Behälter mit chargenweiser zu- und Abführung des Gutes von ein und derselben Seite zum Inhalt hat. Dort wird die Lehre vermittelt, daß für unterschiedliche Gutebewegungen unterschiedliche Antriebsanordnungen vorzusehen sind.

Bei bekannten Einrichtungen zur Behandlung eines Gutes in einer Schwingförderrinne, die im wesentlichen senkrecht und quer zu ihrer Längsachse erregt bzw. in Schwingungen versetzt wird, ergibt sich eine Art schraubenförmiger Umwälzbewegung des in der Förderrinne befindlichen Behandlungsgutes. Die Resultierende der Erregerkraft wirkt hierbei in einer Ebene, die senkrecht auf der Rinnenlängsachse steht. Es können jedoch auch Erregerkomponenten in Rinnenlängsrichtung (in der Hauptförderrichtung) erzeugt werden, die den Transport des Behandlungsgutes in der Hauptförderrichtung bewirken bzw. unterstützen.

Es hat sich nun gezeigt, daß die Umwälzbewegung bzw. die Intensität der Bewegung in der Förderrinne noch wesentlich verbessert werden kann, wenn die Wirkungsrichtung der Resultierenden der Erregerkraft so gewählt wird, daß sie unterhalb mit Abstand von einer in Rinnenlängsrichtung liegenden Massenschwerlinie des Fördersystems durchläuft. Dadurch kann beispielweise mit linearen Schwingungserregern in der Förderrinne eine besonders zweckmäßige und vorteilhafte Bewegung des Behandlungsgutes erzeugt werden. Hierbei ergeben sich im oberen Bereich des Gutstromes höhere Vertikalbeschleunigungen, sogenannte $k_v$-Werte, als im unteren Rinnenbereich. Das Behandlungsgut wird also in jedem Bereich besonders vorteihalt beeinflußt. Unter dem $k_v$-Wert ist das Verhältnis der senkrechten Rinnenbeschleunigungskiomponente zur Erdbeschleunigung zu verstehen.

Zweckmäßigerweise wird die Wirkungrichtung der Resultierenden der Erregerkraft den jeweiligen Betriebsbedingungen, der Art der Behandlung oder dem zu behandelnden Gut angepaßt. Der Füllungsgrad der Rinne wird vorteilhaft etwa zwischen 10 und 50 % gewählt.

Bei einer zum erfindungsgemäßen Verfahren geeigneten Schwingförderrinne sind der Schwingungserreger und/oder die Anschlußelemente für den Erreger so ausgebildet, daß die Wirkungsrichtung der Resultierenden der Erregerkraft einen Abstand unterhalb zu einer in Rinnenlängsrichtung liegenden Massenschwerlinie des Fördersystems aufweist. Zweckmäßigerweise werden der Schwingungserreger und-/oder Erregergewichte verstellbar angeordnet, so daß die Wirkungsrichtung der Erregerkraft veränderbar ist. Auch eine elektrische Verstellung der Wirkungsrichtung ist möglich, z.B. mit Hilfe von selbstsynchronisierenden Kreiserregern.

Weiterhin hat es sich als zweckmäßig erwiesen, am Ende der Förderrinne bzw. vor einer in der Förderrinne integrieten Siebstrecke ein Stauwehr fest oder verstellbar anzuordnen. Dadurch wird die Gutverteilung im Rinnenquerschnitt der Förderrinne über die Rinnenlänge beibehalten. Die Oberkante des Stauwehrs kann dabei zweckmäßigerweise entsprechend dem Verlauf der Gutschichtoberfläche ausgebildet werden.

Weitere vorteihafte Ausgestatungen ergeben sich dadurch, daß des Stauwehr mit einem in Förderrichtung weisenden Rand versehen wird bzw. entgegengesetzt zur Förderrichtung treppenförmig ausgebildet ist. Die Förderrinne kann halbkreisförmig, rohrförmig, winkelförmig oder vieleckig ausgebildet und in Hauptförderrichtung horizontal, steigend oder fallend angeordnet sein.

Es hat sich herausgestellt, daß das erfindungsgemäße Verfahren und die erfindungsgemäße Schwingförderrinne zum Reinigen und Kühlen von Gußteilen, die noch mit Formsand behaftet sind, gut geeignet ist, insbesondere bei größeren Rinnenausführungen, mit einem Rinnenradius von mehr als etwa 0,5 m.

Das Verfahren und die Schwingförderrinne nach der Erfindung eignen sich für eine große Zahl von verfahrenstechnischen Behandlungsvorgängen wie z. B. Mischen, Trennen, Reinigen, Heizen, Trocknen, Kühlen und ähnliche Verfahren.

Die Erfindung wird an Ausführungsbeispielen in der Zeichnung schematisch dargestellt und in der Beschreibung nährer erläutert. Es zeigen :

Figur 1 Seitenansicht des Gesamtaufbaus einer Schwingförderrinne,
Figur 2 Querschnitt durch eine rohrförmige Schwingförderrinne mit angebautem Schwingungserreger,
Figur 3 Kräfte an einer Schwingförderrinne,
Figur 4 Ansicht der Austragsseite einer rohrförmigen Schwingförderrinne mit Stauwehr,
Figur 5 Längsschnitt in Richtung A-B nach Fig. 4 durch das Austragsende einer Schwingförderrinne mit einem treppenförmig ausgebildeten Stauwehr mit Rand.

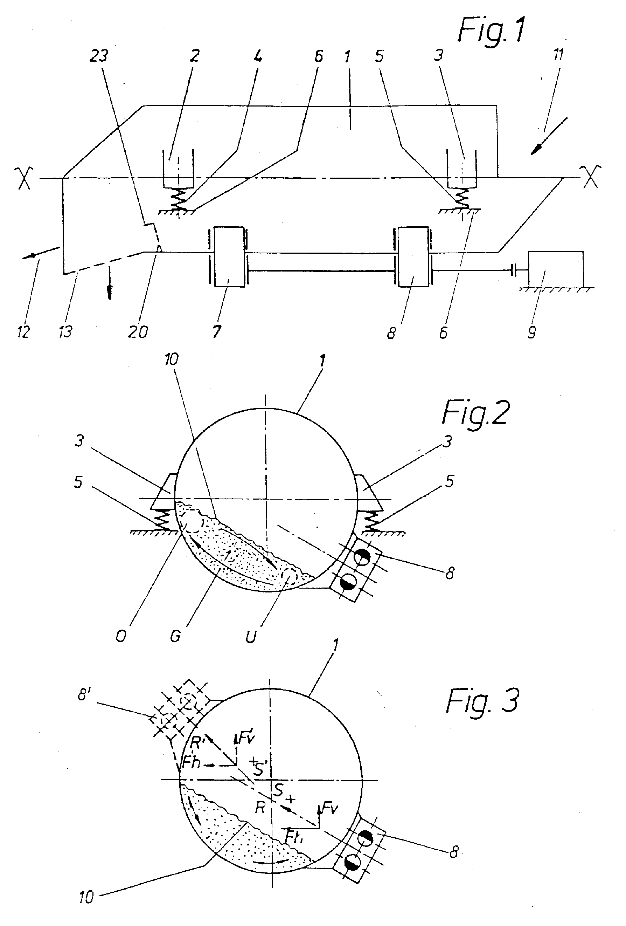

In Fig. 1 ist eine Schwinförderrinne in stark vereinfachter Form in einer Seitenansicht dargestellt, Fig. 2 zeigt einen Querschnitt durch eine solche Rinne. Die rohrförmige Rinne 1 ist über Auflager 2, 3 und Federn

EP 0 086 868 B2

4, 5 auf einem Fundament 6 oder einem Rahmen abgestützt. Die Förderrinne wird durch zwei Schwingungserreger 7, 8 mit Hilfe einer Antriebseinrichtung 9 angetrieben. Hierbei werden vorzugsweise lineare Schwingungserreger bzw. Richterreger verwendet. Die Schwingungserreger erzeugen Schwingungs- bzw. Kraftkomponenten senkrecht und quer zur Hauptförderrichtung, d. h. zur Rinnenlängsrichtung x-x. In der Rinne ergibt sich dadurch eine unsymmetrische Gutverteilung G mit einer zur Horizontalen schräg verlaufenden Gutoberfläche 10. In Fig. 2 ist die Gutschicht G bzw., die sich in der Rinne einstellende Gutverteilung eingezeichnet.

An einer Aufgabestelle 11 wird das zu behandelnde Gut der Förderrinne zugeführt und an einer Abgabestelle 12 aus der Förderrinne ausgetragen. Die Hauptförderrichtung verläuft daher in Rinnenlängsrichtung x-x. Wenn am Ende der Förderrinne 1 beispielsweise noch eine Siebstrecke 13 vorhanden ist, kann eine Trennung von Gutteilen, beispielsweise eine Trennung von Gußteilen und Formsand, in der Förderrinne vorgenommen werden. Die Gußteile werden hierbei an der Abgabestelle 12, der Sand an der Siebstrecke 13 ausgetragen, wie in Fig. 1 durch Pfeile angedeutet ist.

Am Ende der Förderrinne bzw. vor der Siebstrecke 13 kann ein in Fig. 1 gestrichelt gezeichnetes, in Förderrichtung leicht geneigtes Stauwehr 20 angeordnet sein, das auch mit einem nach außen weisenden Rand 23 versehen sein kann.

Die Förderrinne kann in Rinnenlängsrichtung etwa horizontal (wie dargestellt), jedoch auch fallend oder ansteigend angeordnet sein. Bei horizontaler Anordnung muß der Schwingungserreger auch Kraft- bzw. Erregerkomponenten in der Hauptförderrichtung erzeugen. Dies ist bei fallender Anordnung nicht erforderlich, da hierbei das Behandlungsgut durch die Schwerkraftkomponente in der Hauptförderrichtung transportiert wird. Bei steigender Rinnenanordnung muß die Erregerkomponente in Steigungsrichtung so groß sein, daß die Schwerkraftkomponente überwunden und gleichzeitig noch eine Förderbewegung in der Hauptförderrichtung erzielt wird.

In der Förderrinne entsteht im Gutstrom G durch die quer zur Rinnenlängsrichtung x-x wirkenden Kräfte eine schraubenförmige Umwälzbwegung des zu behandelnden Gutes, die in Fig. 2 durch Pfeile angedeutet ist. Das Behandlungsgut wird zunächst, der Richtung der Erregerkraft entsprechend, am Rinnenboden nach außen und oben bewegt. Durch die Rinnenform und die Gutbewegung quer zur Rinnenlängsachse ergibt sich ein Gutbereich, der obere Umkehrpunkt O, in dem sich die Bewegungsrichtung des Behandlungsgutes quer zur Hauptförderrichtung umkehrt. Das Gut bewegt sich danach im wesentlichen in der oberen Gutschicht wieder zur Rinnenmitte bzw. nach unten. Im unteren Bereich kehrt sich die Bewegungsrichtung etwa am unteren Umkehrpunkt U erneut um und das Behandlungsgut gelangt hauptsächlich in der Nähe des Rinnenbodens wieder nach außen und oben.

Die Schwingförderrinne nach der Erfindung kann rohrförmig oder halbkreisförmig ausgebildet sein. Der Rinnenquerschnitt kann jedoch auch wannen- oder muldenförmig oder vieleckig ausgeführt werden. Es ist auch möglich, eine Rinne vorzusehen, die im wesentlichen aus mindestens zwei ebenen, im Winkel zueinander angeordneten Flächen gebildet ist. In der Rinne muß in jedem Fall die oben geschilderte Querbewegung des Behandlungsgutes möglich sein. Die Rinne kann offen oder geschlossen ausgeführt sein.

Als Erreger können verschiedenartige Erregerarten eingesetzt werden, z. B. Richterreger, zwangssynchronisierte Kreiserreger, Magneterreger, Schubkurbeltriebe und andere geeignete Erreger.

In Fig. 3 sind die an der erfindungsgemäßen Schwingförderrinne wirkenden Kräfte dargestellt. Die Zeichnung zeigt im Querschnitt wieder eine kreisförmige Rinne 1 mit dem Schwingungerreger 8. Der Schwingungserreger erzeugt Schwingungs- bzw. Kraftkomponenten $F_h$ und $F_v$ in horizontaler und in vertikaler Richtung. Die Resultierende R der Erregerkraft verläuft mit Abstand von einer in Rinnenlängsrichtung liegenden Massenschwerlinie S der Fördersystems. Die Erregerkräfte liegen im wesentlichen in einer Ebene, die senkrecht zur Rinnenlängsachse steht. Wie bereits erwähnt, können durch den Erreger jedoch auch Kraftkomponenten in Rinnenlängsrichtung bzw. in Hauptförderrichtung erzeugt werden.

Bei der dargestellten Anordnung stellt sich eine Gutschichtverteilung über dem Rinnenquerschnitt ein, wie sie bereits in Fig. 2 angegeben wurde. Die Gutschichtoberfläche 10 verläuft schräg zu einer Horizontalen.

Der Schwingungserreger 8 kann auch auf der linken unteren Seite der Rinne 1 nach Fig. 3 angeordnet werden. Damit ergibt sich eine zu der dargestellten Anordnung spiegelbildliche Ausführung. Es ist auch möglich, den Schwingungserreger an der oberen Seite der Rinne anzuordnen, wie links oben in Fig 3 gestrichelt dargestellt. Der Schwingungserreger 8' erzeugt in diesem Fall horizontale und vertikale Komponenten $F_h'$ und $F_v'$. Die Resultierende R' der Erregerkraft verläuft wieder im Abstand von einer Massenschwerlinie S'. Bei der gestrichelt gezeichneten Erregeranordnung stellt sich die gleiche bzw eine ähnliche Gutverteilung über dem Rinnenquerschnitt mit schräg verlaufender Gutoberfläche 10 ein, wie sie in Fig. 3 dargestellt ist.

Es ist noch darauf hinzuweisen, daß das Behandlungsgut in einer Schwingförderrinne im allgemeinen nur einen geringen Einfluß auf die Lage der in Rinnenlängsrichtung verlaufenden Massenschwerlinie des Fördersystems hat. Dies trifft insbesondere zu, wenn der Füllungsgrad der Schwingförderrinne verhältnismäßig niedrig ist.

3

Wenn die Schwingungserreger 8 bzw 8′ wie in Fig. 3 schematisch dargestellt angeordnet werden und die Wirkungsrichtung der Resultierenden, R, R′ der Erregerkraft so gewählt wird. daß sie unterhalb mit Abstand von einer in Rinnenlängsrichtung liegenden Massenschwerlinie S des Fördersystems durchläuft, ergeben sich im höher liegenden Bereich der Gutschicht höhere $k_v$-Werte als im unteren Bereich. Dies bedeutet, daß das Behandlungsgut in diesem Bereich höheren Vertikalbeschleunigungen unterworfen ist als im unteren Bereich der Gutschicht. Die auf das Behandlungsgut wirkende resultierende Kraft hat also im unteren Gutbereich eine kleinere Neigung gegenüber einer Horizontalen als die resultierende Erregerkraft R. Im oberen Gutbereich ist die Neigung größer. Dadurch ergibt sich eine besonders vorteilhafte Umwälzbewegung des Behandlungsgutes und eine intensive und gleichmäßige Durchmischung des Gutes. Die unterschiedlichen Verhältnisse sind durch Doppelpfeile in Fig. 3 angedeutet.

Es hat sich als vorteilhaft erwiesen, die $K_v$-Werte so zu wählen, daß am oberen Umkehrpunkt Werte größer als etwa 2,0 und am unteren Umkehrpunkt Werte größer als etwa 1,0 auftreten. Die $K_v$-Werte am oberen Umkehrpunkt bzw. die Unterschiede zwischen den $K_v$-Werten am oberen und unteren Umkehrpunkt werden umso größer, je größer der Abstand der Resultierenden Erregerkraft R, R′ von der Massenschwerlinie S eingestellt wird.

Die Einstellung unterschiedlicher Wirkungs richtungen der Erregerkraft kann durch konstruktive Maßnahmen auf verschiedene Weise verwirklicht werden. Die Erreger selbst oder die Anschlußelemente für die Erreger an der Förderrinne können verstellbar ausgebildet werden, sodaß der Neigungswinkel der Erreger zur Rinnenlängsachse verändert werden kann. Hierzu können Zwischenstücke oder Adapter verwendet werden. Es ist auch möglich, die Erreger und damit die Wirkungsrichtung der Erregerkraft parallel zu einer vorgegebenen Stellung bzw. Richtung zu verschieben. Bei Unwuchterregern ist es möglich. die Unwuchtgewichte zu verstellen. Eine elektrische Verstellung ist möglich beispielsweise bei selbstsynchronisierenden Kreiserregern, die elektrisch so gesteuert werden können. daß sich die Wirkungsrichtung der Erregerkraft ändert. Ahnliche mechanische Verstelleinrichtungen sind ebenfalls bekannt. Mit den elektrischen und mechanischen Verstelleinrichtungen kann die Wirkungsrichtung auch während des Betriebs der Schwingförderrinne verstellt werden.

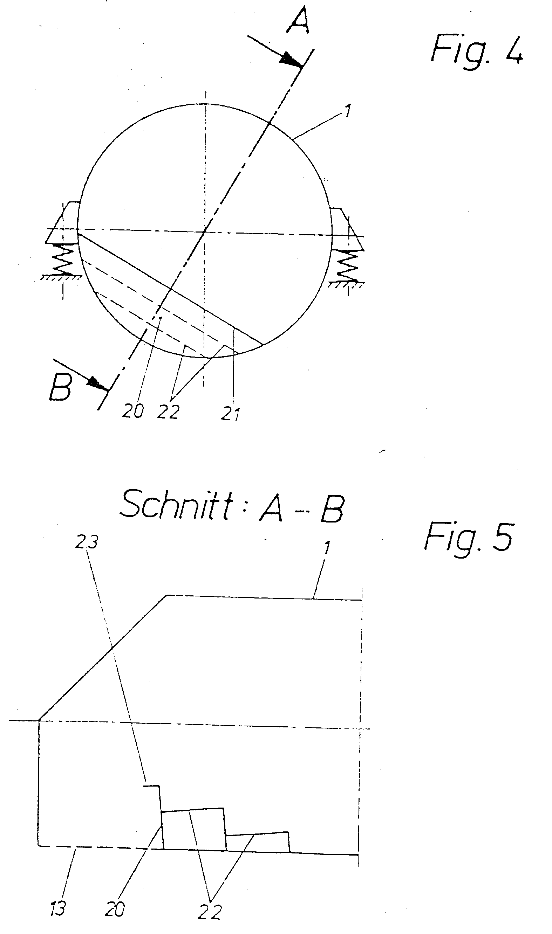

Fig. 4 zeigt eine Ansicht der Austragsseite einer rohrförmigen Schwingförderrinne. Am Austragsende der Schwingförderrinne 1 ist eine Stauwehr 20 angebaut. Das Stauwehr kann beispielsweise die Form eines Staubleches aufweisen, das einen Teil des Rinnenquerschnitts abschließt. Es kann in Förderrichtung leicht geneigt ausgeführt sein (siehe auch Fig. 1 und 5). Das Stauwehr kann fest oder beispielsweise in der Höhe oder in seiner Schräglage verstellbar angeordnet sein. Auch eine motorische Verstellung während des Betriebs ist bei geeigneter Ausbildung und Lagerung des Stauwehrs möglich. Die Lage des Stauwehrs bzw. seine Oberkante 21 ist an die Lage des Gutstromes in der Förderrinne angepaßt d. h. die Oberkante 21 verläuft etwa schräg zu einer Horizontalen, entsprechend der sich einstellenden Oberfläche des Gutstromes in der Rinne. Die Oberkante kann hierbei auch gekrümmt ausgebildet sein. In der Figur ist die in Figur 5 dargestellte treppenförmige Ausbildung 22 des Stauwehrs strichpunktiert gezeichnet. Durch das Stauwehr wird bewirkt, daß die Gutverteilung über dem Rinnenquerschnitt über die gesamte Länge der Rinne etwa gleich bleibt.

Das in Fig. 5 dargestellte Stauwehr 20 weist einen zum Austragsende bzw. nach außen weisenden Rand (Einfassung, Süll. Kragen) 23 auf. Der Rand bildet für größere Teile des Behandlungsgutes eine Art Abstützfläche, die bewirkt, daß solche Teile leicht über das Stauwehr ausgetragen werden.

Eine ähnliche Wirkung hat die sich entgegengesetzt zur Hauptförderrichtung erstreckende treppenförmige Anordnung 22 des Stauwehrs 20. Größere Teile des Behandlungsgutes, z. B. Gußstücke, werden dadurch zum Austragsende in der Schwingförderrichtung hin allmählich etwas angehoben so daß der Austrag erleichtert wird.

Bei einer Schwingförderrinne zum Reinigen und Kühlen von Gußteilen, die mit Formsand behaftet sind, und bei der eine Siebstrecke zum Trennen von Gußteilen und Sand vorhanden ist bzw. in der Schwingförderrinne integriert ist, wird das Stauwehr vor der Siebstrecke 13 angeordnet wie in Fig. 5 angebeutet. Bei einer solchen Schwingförderrinne wird eine Vorrichtung zum Besprühen des Behandlungsgutes z. B. mit, Wasser zweckmäßigerweise so angeordnet, daß im wesentlichen der Gutbereich um den oberen Umkehrpunkt O (siehe Fig. 2) besprüht wird. Dadurch kann das direkte Besprühen von Gußteilen weitgehend vermieden werden. In anderen Fällen wird durch das Besprühen des oberen Gutbereichs eine gleichmäßige Befeuchtung des Behandlungsgutes erreicht.

**Patentansprüche**

1. Verfahren zur Behandlung eines Gutes in einer Schwingförderrinne, insbesondere zum Reinigen und Kühlen von mit Formsand behafteten Gußteilen, bei dem Schwingungs- bzw. Kraft-Komponenten im wesentlichen senkrecht und quer zur Hauptförderrichtung (Rinnenlängsrichtung) erzeugt werden, dadurch gekennzeichnet, daß die Wirkungsrichtung der Resultierenden (R, R') der Erregerkraft so gewählt wird, daß sie unterhalb mit Abstand von einer in Rinnenlängsrichtung (x-x) liegenden Massenschwerlinie (S) des Fördersystems durchläuft, wobei sich eine unsymmetrische Verteilung des Behandlungsgutes (G) in der Förderrinne (1) ergibt und im höher liegenden Bereich des Gutstromes (am oberen Umkehrpunkt O) größere $k_v$-Werte auftreten als im unteren Bereich (am unteren Umkehrpunkt U).

2. Verfahren nach Anspruch 1, dadurch gekennzeichnet, daß die Wirkungsrichtung der Resultierenden (R, R') der Erregerkraft an die jeweiligen Betriebsbedingungen angepaßt wird.

3. Verfahren nach Anspruch 1 oder 2, dadurch gekennzeichnet, daß die $k_v$-Werte am unteren Umkehrpunkt größer als etwa 1,0 und am oberen Umkehrpunkt größer als etwa 2,0 gewählt werden.

4. Verfahren nach einem der Ansprüche 1 bis 3, dadurch gekennzeichnet, daß ein Füllungsgrad der Förderrinne (1) von etwa 10 bis 50 %, vorzugsweise 20 bis 25 % gewählt wird.

## Claims

1. Method for the treatment of a material in a vibratory conveying chute, particularly for the cleaning and cooling of castings which have moulding sand adhering thereto, in which oscillation or respectively force components are produced substantially vertically and transversely to the main conveying direction (longitudinal direction of the chute), characterized in that the direction of effect of the resultants (R, R') of the excitant force is selected such that it runs below at a distance from a mass axis of gravity (S) of the conveying system, lying in the longitudinal direction of the chute (x-x), whereby an asymetrical distribution of the treatment material (G) in the conveying chute (1) is produced, and in the higher region of the flow of material (at the upper reversal point O) greater $k_v$-values occur than in the lower region (at the lower reversal point U).

2. Method according to Claim 1, characterized in that the direction of effect of the resultants (R, R') of the excitant force is adapted to the respective operating conditions.

3. Method according to Claim 1 or 2, characterized in that the $k_v$-values at the lower reversal point are selected greater than approximately 1,0 and at the upper reversal point greater than approximately 2,0.

4. Method according to one of Claims 1 to 3, characterized in that a degree of filling of the conveying chute (1) of approximately 10 to 50 %, preferably 20 to 25 % is selected.

## Revendications

1. Procédé de traitement d'un produit dans un transporteur à vibrations, en particulier pour nettoyer et refroidir des pièces de fonderie chargées de sable de moulage, dans lequel les composantes des vibrations ou des forces sont engendrées sensiblement verticalement et transversalement par rapport à la direction de transport principale (direction longitudinale du transporteur), caractérisé en ce que la direction d'action de la résultante (R, R') de la force d'excitation est choisie de façon à être à un intervalle au-dessous d'une ligne des centres de gravité (S) du système de transport disposée dans la direction longitudinale (x-x) du transporteur, une distribution dissymétrique du produit à traiter (G) s'établissant dans le transporteur (1) et les valeurs $k_v$ qui apparaissent dans la zone supérieure du courant de produit (au point de rebroussement supérieur O) étant plus élevées que dans la zone inférieure (au point de rebroussement inférieur U).

2. Procédé selon la revendication 1, caractérisé en ce que la direction d'action de la résultante (R, R') de la force d'excitation est adaptée aux conditions de fonctionnement présentes dans chaque cas.

3. Procédé selon la revendication 1 ou 2, caractérisé en ce que les valeurs $k_v$ sont choisies de façon à être supérieures à environ 1,0 au point de rebroussement inférieur et à être supérieures à environ 2,0 au point de rebroussement supérieur.

4. Procédé selon l'une des revendications 1 à 3, caractérisé en ce qu'on choisit un degré de remplissage du transporteur (1) d'environ 10 à 50 %, de préférence de 20 à 25 %.

EP 0 086 868 B2

Fig.1

Fig.2

Fig. 3

6

Fig. 4

Schnitt: A - B

Fig. 5